# EUROPEAN PATENT SPECIFICATION

(11) **EP 1 394 475 B1**
(45) Date of publication and mention of the grant of the patent: **19.03.2014**
(21) Application number: 02256017.1
(22) Date of filing: 29.08.2002
(51) Int. Cl.: F24D 3/12, F24D 19/10, G05D 23/19

(54) **Control apparatus**
Steuergerät
Dispositif de commande

(30) Priority: 29.08.2001 GB 0120932
(43) Date of publication of application: 03.03.2004
(73) Proprietor: Polypipe Limited, Edlington Doncaster, DN12 1ES (GB)
(72) Inventor: Raynor, David, Edlington, Doncaster DN12 1ES (GB)
(74) Representative: Oxley, Robin John George

(56) References cited:
- EP-A- 0 548 389
- DE-A- 3 708 449
- DE-U- 20 110 829
- GB-A- 2 148 552

## Description

The invention relates to control apparatus for controlling an underfloor heating system and to an underfloor heating system including such control apparatus.

In most temperate climates it is necessary for buildings to be provided with heating systems which, in modem times, are normally installed as the building is being constructed. One type of commonly used heating system employs metal room-mounted radiators for heat exchange which are supplied with heated water from a central water heating boiler. When a building including such a system is extended by building an extension such as a conservatory it is often necessary to provide the extension with its own heating system. It would be desirable if the heating system could be integrated with the main heating system of the building, but also be separately controllable to reflect the different usage patterns of the extension.

GB 2,148,552 discloses a known control system according to the preamble of claim 1.

It is an object of the present invention to provide an improvement of such a system.

According to the present invention there is provided control apparatus for controlling an underfloor heating system wherein the underfloor heating system is supplied with heating fluid from a separately controlled heating system, the control apparatus comprising first sensor means for sensing the temperature of heating fluid in the separately controlled system, second sensor means for sensing the ambient temperature around the underfloor heating system, and control means to control the flow of heating fluid to the underfloor heating system in response to signals from the first and second sensors, the first sensor comprising a pipe thermostat, the second sensor comprising a thermostat, and the control means comprising a pump, the control apparatus being arranged such that the pump is enabled to operate when a preset temperature on the pipe thermostat is reached and the ambient temperature is below that preset on the second sensor means.

The apparatus may include a thermostatic mixing valve for mixing supplies of heated and non-heated fluid to obtain a correct temperature.

According to a second aspect of the invention there is provided an underfloor heating system, including control apparatus according to the invention and conduit means for flow of heating fluid and heat exchange means comprising an underfloor heating element.

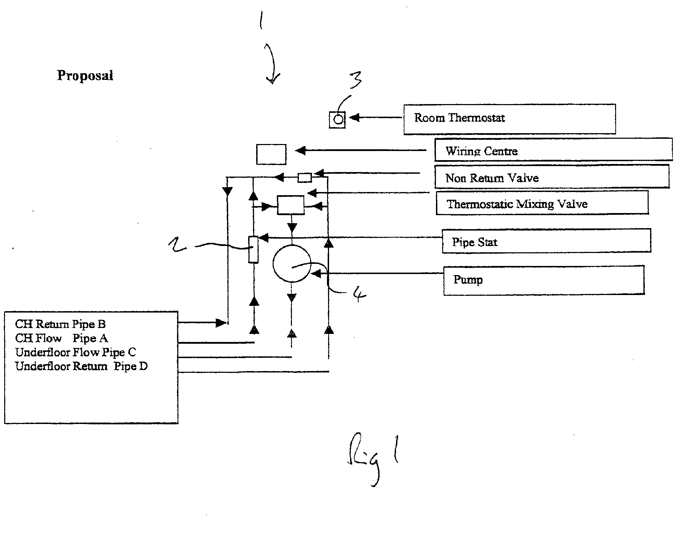

The invention will further be described by reference to the following example in which Figure 1 is a schematic block diagram illustrating the various interactions between the elements of the apparatus and system.

Referring to the drawing there is illustrated control apparatus 1 for controlling an underfloor heating system (not shown) wherein the underfloor heating system is supplied with heating medium from a separately controlled heating system (a mains heating system), the control apparatus 1 comprising first sensor means 2 (a pipe thermostat) for sensing the temperature of a heating medium in a separately controlled system, second sensor means 3 (a room thermostat) for sensing the ambient temperature around the underfloor heating system, and control means 4 (a pump) to control the flow of heating medium to the underfloor heating system in response to signals from the first and second sensors.

In this embodiment the control apparatus is provided as a single control unit for conservatories and other extensions for underfloor heating installations which is adapted to accept water from the heating means at 80°C, discharge water to underfloor heating at 40-60°C, boost pressure to enable the installation of longer single circuits, provide air temperature control, and which will only work when heating is available.

In use, when the mains heating is operational, water flows through pipe A and returns to the mains heating through pipe B. When the preset temperature on the pipe thermostat is reached, a live connection is made in order to enable the pump to operate. A second live connection between the room thermostat and the pump enables the pump to operate when heated water is available and required as sensed by the pipe thermostat and room thermostat respectively. The pump operates and water is drawn through pipes A and D and mixed via the thermostatic mixing valve to a preset temperature which can be adjusted. From there water is pumped into the underfloor heating elements through pipe C and returned via pipe D. Some water from pipe D is re-circulated and some is returned to the main system by a pipe B. A non-return valve prevents water from the main system being drawn into the mixing valve. When the room reaches the temperature set on the room thermostat power to the pump is switched off and heating thus ceases. When the main heating is switched off the pipe thermostat senses the temperature fall and again power to the pump is shut off.

## Claims

1. Control apparatus (1) for controlling an underfloor heating system wherein the underfloor heating system is supplied with heating fluid from a separately controlled heating system, the control apparatus comprising first sensor means (2) for sensing the temperature of heating fluid in the separately controlled system, second sensor means (3) for sensing the ambient temperature around the underfloor heating system, and control means (4) to control the flow of heating fluid to the underfloor heating system in response to signals from the first and second sensors, the first sensor comprising a pipe thermostat, the second sensor comprising a thermostat, and the control means comprising a pump, **characterised by** the control apparatus being arranged such that the pump is enabled to operate when a preset temperature on the pipe thermostat is reached and the ambient temperature is below that preset on the second sensor means.

2. Apparatus according to claim 1, including a thermostatic mixing valve for mixing supplies of heated and non-heated fluid.

3. An underfloor heating system, including apparatus as set out in either preceding claim, including conduit means for flow of heating fluid and heat exchange means comprising an underfloor heating element.

## Patentansprüche

1. Steuergerät (1) zum Steuern eines Fußbodenheizsystems, wobei das Fußbodenheizsystem mit Heizflüssigkeit aus einem separat gesteuerten Heizssystem versorgt wird, wobei das Steuergerät ein erstes Sensormittel (2) zum Erfassen der Temperatur der Heizflüssigkeit in dem separat gesteuerten System, ein zweites Sensormittel (3) zum Erfassen der Umgebungstemperatur um das Fußbodenheizsystem herum, und ein Steuermittel (4) zum Steuern des Flusses von Heizflüssigkeit zum Fußbodenheizsystem als Antwort auf Signale von dem ersten und zweiten Sensor umfasst, wobei der erste Sensor einen Rohranlegeregler umfasst, der zweite Sensor einen Wärmeregler umfasst, und das Steuermittel eine Pumpe umfasst, **dadurch gekennzeichnet, dass** das Steuergerät derart angeordnet ist, dass die Pumpe funktionieren kann, wenn eine auf dem Rohranlegeregler voreingestellte Temperatur ereicht ist und die Umgebungstemperatur unterhalb der auf dem zweiten Sensormittel voreingestellten ist.

2. Gerät nach Anspruch 1, einschließend ein thermostatisches Mischventil zum Mischen der Zuführungen von erhitzter und nicht erhitzter Flüssigkeit.

3. Fußbodenheizsystem, einschließend ein Gerät wie in einem der vorhergehenden Ansprüche dargelegt, einschließend ein Leitungsmittel für den Fluss der Heizflüssigkeit und ein Wärmeaustauschmittel, umfassend ein Fußbodenheizelement.

## Revendications

1. Appareil de commande (1) pour commander un système de chauffage par le sol, dans lequel le système de chauffage par le sol est approvisionné en fluide chauffant à partir d'un système de chauffage commandé séparément, l'appareil de commande comprenant un premier moyen de capteur (2) pour capter la température du fluide chauffant dans le système commandé séparément, un deuxième moyen de capteur (3) pour capter la température ambiante autour du système de chauffage par le sol, et un moyen de commande (4) pour commander l'écoulement du fluide chauffant vers le système de chauffage par le sol en réponse à des signaux du premier et du deuxième capteur, le premier capteur comprenant un thermostat pipe, le deuxième capteur comprenant un thermostat, et le moyen de commande comprenant une pompe, **caractérisé en ce que** l'appareil de commande est arrangé de sorte à ce que la pompe puisse être opérante lorsqu'une température préréglée sur le thermostat pipe est atteinte et que la température ambiante est en dessous de celle préréglée sur le deuxième moyen de capteur.

2. Appareil selon la revendication 1, incluant un mitigeur thermostatique pour mélanger les fluides chauffés et non chauffés approvisionnés.

3. Système de chauffage par le sol, incluant un appareil tel que décrit dans n'importe quelle revendication précédente, incluant un moyen de conduit pour l'écoulement du fluide chauffant et un échangeur de chaleur comprenant un élément de chauffage par le sol.
